# FASCICULE DE BREVET EUROPEEN

(11) **EP 3 792 059 B1**
(45) Date de publication et mention de la délivrance du brevet: **07.06.2023**
(21) Numéro de dépôt: 20195463.3
(22) Date de dépôt: 10.09.2020
(51) Int. Cl.: B32B 33/00, B32B 25/04, B60N 3/04, E04F 15/10

(54) **PROCÉDÉ DE FABRICATION D'UN REVÊTEMENT DE SOL ET REVÊTEMENT DE SOL**
VERFAHREN ZUR HERSTELLUNG EINES BODENBELAGS UND BODENBELAG
METHOD OF MANUFACTURING FLOORING AND FLOORING

(30) Priorité: 11.09.2019 FR 1909984
(43) Date de publication de la demande: 17.03.2021
(73) Titulaire: Adhetec, 65000 Tarbes (FR)
(72) Inventeur: NIELSEN, Olivier, 65240 Ibos (FR)
(74) Mandataire: Gevers & Orès

(56) Documents cités:
- FR-A1- 3 010 428
- US-A1- 2016 297 132

## Description

### Domaine technique de l'invention

L'invention concerne un procédé de fabrication de revêtement de sol ainsi que le revêtement de sol obtenu par ce procédé.

### Arrière-plan technique

Les revêtements de sols synthétiques sont généralement des revêtements multicouches (e.g. FR3010428 A1, US2016/297132 A1). Ils sont habituellement constitués d'une couche support consistant généralement en une nappe de fibres noyées dans de la matière plastique telle que du polychlorure de vinyle (PVC) et recouverte d'une couche d'impression présentant un motif ou un décor. La couche de décor est protégée de l'usure par une couche de protection transparente en matière plastique.

Ce type de revêtement de sol est économique mais présente de nombreux inconvénients. Il est, en effet, très inflammable et ne peut donc pas être posé dans des lieux présentant des normes de protection incendie strictes tels que des aéronefs ou des véhicules ferroviaires.

De plus, il amortit assez mal les chocs. Il est donc préférable d'ajouter d'une sous-couche résiliente telle que de la mousse, à la couche support afin d'améliorer le confort de ce revêtement. Or la couche résiliente et la couche support ont tendance à se désassembler au cours du temps.

Les motifs ou décor de la couche d'impression sont souvent limités.

Enfin, les revêtements de sols synthétiques sont pour la plupart émetteurs de composés organiques notamment à cause des solvants et des adhésifs qu'ils contiennent.

Il existe donc un besoin de nouveaux revêtements de sols synthétiques qui, tout en restant économiques, présentent de meilleures qualités de résistance à l'usure, aux chocs et au feu.

### Résumé de l'invention

Pour ce faire, l'invention concerne un procédé de fabrication d'un revêtement de sol comprenant les étapes de :
(a) vulcanisation d'une couche, dite couche support, en élastom ère,
(b) assemblage d'une couche, dite couche intermédiaire à la couche support lors de l'étape de vulcanisation, la couche intermédiaire étant en un matériau choisi dans le groupe constitué de polyester, polyétheréthercétone, polyétherimide, polysulfone, polyimide, polyamide, polymère fluoré, polyuréthane et papier,
(c) impression d'une couche, dite couche d'impression, sur la couche intermédiaire ou sur une couche, dite couche de protection, transparente,
(d1) dans le cas où la couche d'impression a été imprimée sur la couche intermédiaire, assemblage de la couche de protection transparente à la couche d'impression de l'ensemble comprenant la couche d'impression, la couche intermédiaire et la couche support ou
(d2) dans le cas où la couche d'impression a été imprimée sur la couche de protection transparente, assemblage de la couche d'impression de l'ensemble comprenant la couche d'impression et la couche de protection à la couche intermédiaire de l'ensemble comprenant la couche intermédiaire et la couche support.

La couche support en élastomère confère au revêtement de sol une résistance au choc et un confort de marche. De plus, l'assemblage de la couche support à la couche intermédiaire lors de l'étape de vulcanisation permet une meilleure adhérence entre ces deux matériaux. En effet, de l'élastomère de la couche support en cours de vulcanisation pénètre les aspérités de la couche intermédiaire où il réticule.

Dans la description qui va suivre, on utilise les termes de dessus, dessous, supérieur(e), inférieur(e) et analogues pour définir une relation d'ordre entre les différentes couches constituant le revêtement de sol selon l'invention et/ou leurs faces respectives, par référence à un axe normal à la surface sur lequel le revêtement de sol doit être apposé et orienté de la surface sur lequel le revêtement de sol doit être apposé vers l'extérieur du revêtement de sol.

Préalablement à la vulcanisation de la couche support, cette dernière peut être formée en mélangeant un élastomère à un agent de vulcanisation. La composition d'élastomère vulcanisable ainsi obtenue est étirée pour former un film par exemple par calandrage.

Avantageusement, l'étape de vulcanisation est réalisée à une température comprise entre 150°C et 200°C, de préférence entre 155°C et 165°C, et à une pression comprise entre 100 bars et 185 bars.

L'assemblage de la couche intermédiaire et de la couche support est réalisé en mettant en contact ces deux couches lors de l'étape de vulcanisation et en exerçant une pression sur ces deux couches.

L'impression de la couche d'impression peut être une impression numérique par exemple une impression à jet d'encre ou une impression par sérigraphie. De préférence, l'impression est une impression à jet d'encre. Le motif imprimé peut ainsi être facilement personnalisé.

Selon une première variante de l'invention, le procédé selon l'invention comprend les étapes de :
(c1) impression de la couche d'impression sur la couche intermédiaire,
(d1) assemblage de la couche de protection à la couche d'impression.

La couche intermédiaire est en un matériau choisi dans le groupe constitué de polyester, polyétheréthercétone, polyétherimide, polysulfone, polyimide, polyamide, polymère fluoré, polyuréthane et papier. De préférence, la couche intermédiaire est en polyester.

Dans cette variante, la couche de protection peut être déposée directement sur la couche d'impression ou la couche de protection peut être assemblée à la couche d'impression au moyen d'une couche d'adhésif. De préférence, une composition de protection fluide ou pâteuse est appliquée sur la couche d'impression et durcie pour former la couche de protection. De préférence, la composition de protection peut être une résine réticulable aux UV. La résine est appliquée par coulage ou pulvérisée sur la couche d'impression puis durcie aux UV. Ainsi on s'affranchit des contraintes liées à l'utilisation des solvants. De plus, lorsqu'une encre UV est utilisée pour former la couche d'impression, il est possible d'augmenter l'adhérence entre la couche d'impression et la couche de protection en :
- réticulant la couche d'impression aux UV de manière incomplète,
- déposant une résine de protection réticulable aux UV et
- réticulant aux UV la résine de protection de manière à former la couche de protection. Ainsi, les liaisons pendantes de l'encre de la couche d'impression qui n'ont pas été réticulées car la réticulation UV de la couche d'impression a été écourtée pourront réagir avec les liaisons pendantes de résine UV de la couche de protection lors de la réticulation de celle-ci.

Alternativement, la couche de protection peut être réalisée par le dépôt d'une résine bicomposants par exemple de type poly-isocyanate et polyol ou poly-isocyanate et amine. Ces résines peuvent être réticulées, cette réticulation pouvant être catalysée par la chaleur.

Une résine en phase solvant avec un durcisseur peut également être utilisée pour former la couche de protection.

Selon une deuxième variante de l'invention, le procédé selon l'invention comprend les étapes de :
(c2) impression de la couche d'impression sur la couche de protection,
(d2) assemblage de la couche d'impression de l'ensemble comprenant la couche d'impression et la couche de protection à la couche intermédiaire de l'ensemble comprenant la couche intermédiaire et la couche support.

Dans cette variante, la couche de protection est préférablement fournie sous forme de film, par exemple un film de polyuréthane ou d'acrylique.

L'assemblage de la couche d'impression à la couche intermédiaire peut se faire au moyen d'une couche adhésive.

L'invention concerne également un revêtement de sol caractérisé en ce qu'il comprend au moins :
- une couche, dite couche de protection, transparente,
- une couche, dite couche d'impression, consistant en une couche d'encre,
- une couche, dite couche intermédiaire, en un matériau choisi dans le groupe constitué de polyester, polyétheréthercétone, polyétherimide, polysulfone, polyimide, polyamide, polymère fluoré, polyuréthane et papier,
- une couche, dite couche support, en élastomère,
- la couche intermédiaire et la couche support étant assemblées. Selon un mode de réalisation préférée, la couche intermédiaire et la couche support sont assemblées lors de la vulcanisation de la couche support.

Typiquement, la couche intermédiaire et la couche support forment un ensemble, dit ensemble basal. La couche d'impression est située entre la couche intermédiaire de l'ensemble basal et la couche de protection. La couche d'impression consiste en une couche d'encre imprimée sur la couche intermédiaire ou sur la couche de protection.

Ainsi, selon une première variante de l'invention, la couche d'impression consiste en une couche d'encre imprimée sur la couche intermédiaire. Selon cette variante, la couche d'impression peut être recouverte directement par la couche de la protection. La couche d'impression est alors en sandwich entre la couche intermédiaire et la couche de protection. La couche d'impression peut également être recouverte par la couche de la protection par l'intermédiaire d'une couche adhésive. Toutefois, afin de limiter l'émission de composés organiques volatiles, il est préférable de privilégier les revêtements de sol ne présentant pas de couche adhésive.

Selon une deuxième variante de l'invention, la couche d'impression consiste en une couche d'encre imprimée sur la couche de protection. L'ensemble composé de la couche de protection et de la couche d'impression peut être lié à l'ensemble basal composé de la couche intermédiaire et de la couche support par une couche d'adhésif. La couche d'adhésif est alors prise en sandwich entre la couche intermédiaire et la couche d'impression. Avantageusement, la couche d'impression peut consister en une couche d'encre déposée par une imprimante numérique telle qu'une imprimante à jet d'encre ou par sérigraphie. L'encre peut être avec ou sans solvant. De préférence, une encre sans solvant telle qu'une encre UV est utilisée.

Quant à la couche de protection, elle peut être en polyuréthane ou en acrylique. Elle est de préférence en résine UV telle que par exemple une résine UV à base de polyester acrylate, d'acrylate, de polyester acrylate ou d'uréthane acrylate. Avantageusement, la couche de protection comprend un retardateur de flammes.

La couche intermédiaire peut être sous forme de film, tissé ou intissé.

La couche intermédiaire est en un matériau choisi dans le groupe constitué de polyester, polyétheréthercétone, polyétherimide, polysulfone, polyimide, polyamide, polymère fluoré, polyuréthane et papier.

De préférence, la couche intermédiaire est en polyester. Le polyester de la couche intermédiaire peut par exemple être un copolyester semi-aromatique tel que le polytéréphtalate d'éthylène (PET), le polytéréphtalate de butylène (PBT), le polytéréphtalate de triméthylène (PTT) ou le polyéthylène de naphtalate (PEN). De préférence, le polyester de la couche intermédiaire est du PET.

Avantageusement, la couche intermédiaire est opaque. Ainsi, les défauts de la couche support sont masqués par la couche intermédiaire.

L'élastomère de la couche support peut être choisi dans le groupe constitué du caoutchouc butadiène-acrylonitrile, du butadiène acrylonitrile hydrogéné, du nitrile carboxydé, du caoutchouc éthylène-propylène-diène, du silicone polysiloxane-vinyle-méthyle, du caoutchouc fluoré, du caoutchouc perfluoré, chloroprène, du polyacrylate et de l'éthylène-acrylate. De préférence, l'élastomère de la couche support est en caoutchouc butadiène-acrylonitrile. Avantageusement, l'élastomère comprend un retardateur de flammes, préférablement un retardateur de flammes halogéné.

Le revêtement de sol peut comprendre un adhésif sur sa face inférieure, plus précisément sur la face inférieure de la couche support et ce afin de pouvoir coller le revêtement selon l'invention au sol. Cet adhésif peut être enduit ou déposé sous forme d'un film. Il peut être protégé avec une feuille de protection afin que le revêtement de sol puisse être manipulé sans que le manipulateur ne soit en contact avec l'adhésif.

Le revêtement de sol selon l'invention peut se présenter sous forme de rouleau.

Le revêtement de sol selon l'invention peut notamment être utilisé dans le domaine ferroviaire ou aéronautique.

### Brève description des figures

D'autres buts, caractéristiques et avantages de l'invention apparaîtront à la lecture de la description suivante donnée à titre uniquement d'exemple non limitatif et qui se réfère notamment aux figures annexées dans lesquelles :
[Fig.1] La figure 1 représente des sections transversales schématiques de différentes couches ou d'ensembles de couches illustrant les étapes successives d'un premier mode de réalisation du procédé de fabrication d'un revêtement de sol selon l'invention;
[Fig.2] La figure 2 représente des sections transversales schématiques de différentes couches ou d'ensembles de couches illustrant les étapes successives d'un deuxième mode de réalisation du procédé de fabrication d'un revêtement de sol selon l'invention;
[Fig.3] La figure 3 représente des sections transversales schématiques de différentes couches ou d'ensembles de couches illustrant les étapes successives d'un troisième mode de réalisation du procédé de fabrication d'un revêtement de sol selon l'invention.

Sur les figures, les échelles et les proportions ne sont pas strictement respectées et ce, à des fins d'illustration et de clarté.

### Description détaillée de l'invention

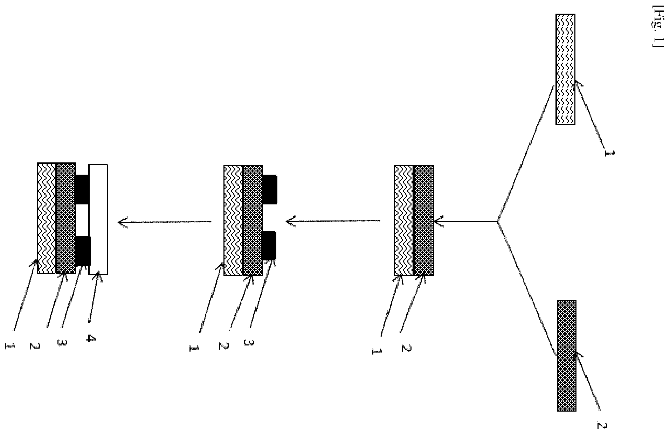

La figure 1 représente un premier mode de réalisation du procédé de fabrication d'un revêtement de sol selon l'invention.

Une couche support 1 destinée à être vulcanisée est fournie. La couche support 1 est typiquement un film d'élastomère d'une épaisseur de 0.5 mm à 3 mm.

Afin de fabriquer ce film d'élastomère, un mélange d'élastomère et d'agent de vulcanisation a été formulé puis calandré pour obtenir un film de l'épaisseur voulue.

Une couche intermédiaire 2 en polyester est également fournie. La couche intermédiaire 2 est généralement opaque et a typiquement une épaisseur de 23µm à 300µm. Cette couche intermédiaire 2 peut être sous forme de film, de tissu ou intissé, et ce en fonction de la rugosité voulue. La tension de surface de la couche intermédiaire 2 peut également être augmentée en soumettant préalablement cette couche à un traitement de surface corona ou plasma.

La couche support 1 et la couche intermédiaire 2 sont superposées. La face supérieure de la couche support 1 est mise en contact avec la face inférieure de la couche intermédiaire 2. L'ensemble est soumis à une température de 150°C à 200°C et à une pression de 100 à 185 bars. Cette opération peut être effectuée dans un dispositif de type rotocure. La couche support 1 est ainsi vulcanisée. Lors de la vulcanisation, l'élastomère de la couche support 1 qui est au contact de la couche intermédiaire 2 pénètre dans les aspérités de cette dernière et y réticule créant ainsi une liaison très forte entre la couche support 1 et la couche intermédiaire 2.

De l'encre est imprimée sur la face supérieure de la couche intermédiaire de manière à former une couche d'impression 3. L'impression est réalisée par une imprimante à jet d'encre avec de l'encre UV. L'encre est durcie aux UV.

La couche d'impression 3 est ensuite recouverte d'une couche de protection 4. Le dépôt de la couche de protection sur la couche d'impression peut se faire par enduction, par exemple par enduction « roll to roll », par pulvérisation, par exemple par pulvérisation au pistolet ou par coulage et étalement.

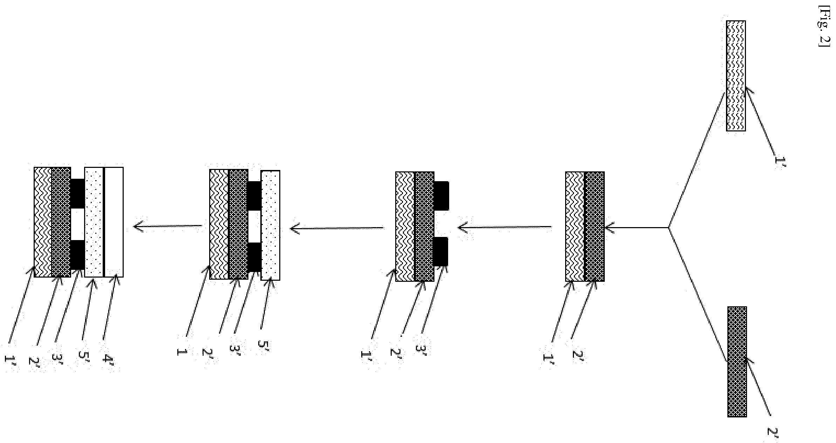

La figure 2 représente un deuxième mode de réalisation du procédé de fabrication d'un revêtement de sol selon l'invention. Les étapes de vulcanisation de la couche support 1', d'assemblage de la couche intermédiaire 2' et d'impression de la couche d'impression 3' sont identiques à celles du premier mode de réalisation.

Dans ce deuxième mode de réalisation, suite à l'étape d'impression, la face supérieure de la couche d'impression 3' est recouverte d'une couche adhésive 5'. La couche de protection 4' est ensuite collée sur la couche d'impression 3' au moyen de cette couche adhésive 5'.

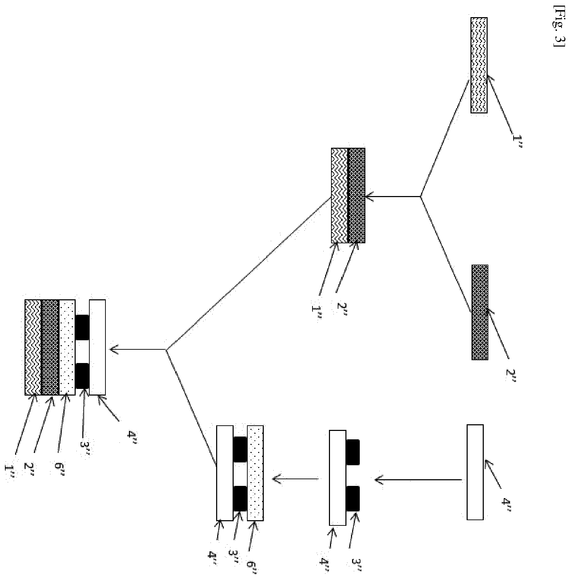

La figure 3 représente un troisième mode de réalisation du procédé de fabrication d'un revêtement de sol selon l'invention. Les étapes de vulcanisation de la couche support 1", d'assemblage de la couche intermédiaire 2" sont identiques à celles du premier et du deuxième modes de réalisation.

Le procédé de fabrication d'un revêtement de sol selon ce troisième mode de réalisation comprend une étape fourniture d'une couche de protection 4". La couche d'impression 3" est imprimée sur une face de la couche de protection 4", par exemple au moyen d'une imprimante à jet d'encre. Une couche d'adhésif 6" est déposée sur la couche d'impression 3". La couche d'impression 3" est alors en sandwich entre la couche de protection et la couche d'adhésif 6". L'ensemble comprenant la couche d'adhésif 6", la couche d'impression 3" et la couche de protection 4" est assemblé à la face supérieure de la couche intermédiaire 2" de l'ensemble comprenant la couche intermédiaire 2" et la couche support 1" formant ainsi le revêtement de sol.

### Liste des signes de référence

- 1, 1', 1" :: couche support
- 2, 2', 2" :: couche intermédiaire
- 3, 3', 3" :: couche d'impression
- 4, 4', 4" :: couche de protection
- 5' :: couche adhésive
- 6" :: couche d'adhésif

## Revendications

1. Procédé de fabrication d'un revêtement de sol **caractérisé en ce qu'**il comprend les étapes de :
(a) vulcanisation d'une couche, dite couche support (1), en élastomère,
(b) assemblage d'une couche, dite couche intermédiaire (2), à la couche support (1) lors de l'étape de vulcanisation, la couche intermédiaire (2) étant en un matériau choisi dans le groupe constitué de polyester, polyétheréthercétone, polyétherimide, polysulfone, polyimide, polyamide, polymère fluoré, polyuréthane et papier,
(c) impression d'une couche, dite couche d'impression (3), sur la couche intermédiaire (2) ou sur une couche, dite couche de protection (4), transparente,
(d1) dans le cas où la couche d'impression (3) a été imprimée sur la couche intermédiaire (2), assemblage de la couche de protection (4) transparente à la couche d'impression (3) de l'ensemble comprenant la couche d'impression (3), la couche intermédiaire (2) et la couche support (1) ou
(d2) dans le cas où la couche d'impression (3) a été imprimée sur la couche de protection (4) transparente, assemblage de la couche d'impression (3) de l'ensemble comprenant la couche d'impression (3) et la couche de protection (4) à la couche intermédiaire (2) de l'ensemble comprenant la couche intermédiaire (2) et la couche support (1).

2. Procédé de fabrication selon la revendication 1 **caractérisé en ce que** la couche d'impression (3) est imprimée par impression numérique, de préférence par impression à jet d'encre.

3. Procédé de fabrication selon la revendication 1 ou 2 **caractérisé en ce qu'**il comprend les étapes de :
(c1) impression de la couche d'impression (3) sur la couche intermédiaire (2),
(d1) assemblage de la couche de protection (4) à la couche d'impression (3).

4. Procédé de fabrication selon la revendication 1 ou 2 **caractérisé en ce qu'**il comprend les étapes de :
(c2) impression de la couche d'impression (3) sur la couche de protection (4),
(d2) assemblage de la couche d'impression (3) de l'ensemble comprenant la couche d'impression (3) et la couche de protection (4) à la couche intermédiaire (2) de l'ensemble comprenant la couche intermédiaire (2) et la couche support (1).

5. Revêtement de sol comprenant au moins :
- une couche, dite couche de protection (4), transparente,
- une couche, dite couche d'impression (3), consistant en une couche d'encre,
- une couche, dite couche intermédiaire (2),
- une couche, dite couche support (1),
- la couche intermédiaire (2) et la couche support (1) étant assemblées,
**caractérisé en ce que** :
- la couche intermédiaire (2) est en un matériau choisi dans le groupe constitué de polyester, polyétheréthercétone, polyétherimide, polysulfone, polyimide, polyamide, polymère fluoré, polyuréthane et papier et
- la couche support (1) est en élastomère.

6. Revêtement de sol selon la revendication 5 **caractérisé en ce que** la couche intermédiaire (2) est en polyester.

7. Revêtement de sol selon la revendication 5 ou 6 **caractérisé en ce que** la couche intermédiaire (2) et la couche support (1) sont assemblées lors de la vulcanisation de l'élastomère de la couche support (1).

8. Revêtement de sol selon l'une quelconque des revendications 5 à 7 **caractérisé en ce que** la couche d'impression (3) consiste en une couche d'encre imprimée sur la couche intermédiaire (2).

9. Revêtement de sol selon la revendication 8 **caractérisé en ce que** la couche d'impression (3) est en sandwich entre la couche intermédiaire (2) et la couche de protection (4).

10. Revêtement de sol selon l'une quelconque des revendications 5 à 7 **caractérisé en ce que** la couche d'impression (3) consiste en une couche d'encre imprimée sur la couche de protection (4).

11. Revêtement de sol selon l'une quelconque des revendications 5 à 10 **caractérisé en ce que** la couche intermédiaire (2) est tissée, intissée ou sous forme de film.

## Patentansprüche

1. Verfahren zur Herstellung eines Bodenbelags, **dadurch gekennzeichnet, dass** es die folgenden Schritte umfasst:
(a) Vulkanisieren einer Schicht, der sogenannten Trägerschicht (1), aus Elastomer,
(b) Zusammenfügen einer Schicht, der sogenannten Zwischenschicht (2), mit der Trägerschicht (1) während des Vulkanisationsschritts, wobei die Zwischenschicht (2) aus einem Material ist, das aus der Gruppe ausgewählt ist, die aus Polyester, Polyetheretherketon, Polyetherimid, Polysulfon, Polyimid, Polyamid, Fluorpolymer, Polyurethan und Papier besteht,
(c) Drucken einer Schicht, der sogenannten Druckschicht (3), auf die Zwischenschicht (2) oder auf eine Schicht, die sogenannte Schutzschicht (4), die transparent ist,
(d1) in dem Fall, dass die Druckschicht (3) auf die Zwischenschicht (2) gedruckt wurde, Zusammenfügen der transparenten Schutzschicht (4) mit der Druckschicht (3) der Anordnung, welche die Druckschicht (3), die Zwischenschicht (2) und die Trägerschicht (1) umfasst, oder
(d2) in dem Fall, dass die Druckschicht (3) auf die transparente Schutzschicht (4) gedruckt wurde, Zusammenfügen der Druckschicht (3) der Anordnung, welche die Druckschicht (3) und die Schutzschicht (4) umfasst, mit der Zwischenschicht (2) der Anordnung, welche die Zwischenschicht (2) und die Trägerschicht (1) umfasst.

2. Herstellungsverfahren nach Anspruch 1, **dadurch gekennzeichnet, dass** die Druckschicht (3) durch Digitaldruck, vorzugsweise durch Tintenstrahldruck, gedruckt wird.

3. Herstellungsverfahren nach Anspruch 1 oder 2, **dadurch gekennzeichnet, dass** es die folgenden Schritte umfasst:
(c1) Drucken der Druckschicht (3) auf die Zwischenschicht (2),
(d1) Zusammenfügen der Schutzschicht (4) mit der Druckschicht (3).

4. Herstellungsverfahren nach Anspruch 1 oder 2, **dadurch gekennzeichnet, dass** es die folgenden Schritte umfasst:
(c2) Drucken der Druckschicht (3) auf die Schutzschicht (4),
(d2) Zusammenfügen der Druckschicht (3) der Anordnung, welche die Druckschicht (3) und die Schutzschicht (4) umfasst, mit der Zwischenschicht (2) der Anordnung, welche die Zwischenschicht (2) und die Trägerschicht (1) umfasst.

5. Bodenbelag, der mindestens Folgendes umfasst:
- eine Schicht, die sogenannte Schutzschicht (4), die transparent ist,
- eine Schicht, die sogenannte Druckschicht (3), die aus einer Tintenschicht besteht,
- eine Schicht, die sogenannte Zwischenschicht (2),
- eine Schicht, die sogenannte Trägerschicht (1),
- wobei die Zwischenschicht (2) und die Trägerschicht (1) zusammengefügt sind,
**dadurch gekennzeichnet, dass**:
- die Zwischenschicht (2) aus einem Material ist, das aus der Gruppe ausgewählt ist, die aus Polyester, Polyetheretherketon, Polyetherimid, Polysulfon, Polyimid, Polyamid, Fluorpolymer, Polyurethan und Papier besteht, und
- die Trägerschicht (1) aus Elastomer ist.

6. Bodenbelag nach Anspruch 5, **dadurch gekennzeichnet, dass** die Zwischenschicht (2) aus Polyester ist.

7. Bodenbelag nach Anspruch 5 oder 6, **dadurch gekennzeichnet, dass** die Zwischenschicht (2) und die Trägerschicht (1) bei der Vulkanisation des Elastomers der Trägerschicht (1) zusammengefügt werden.

8. Bodenbelag nach einem der Ansprüche 5 bis 7, **dadurch gekennzeichnet, dass** die Druckschicht (3) aus einer Tintenschicht besteht, die auf die Zwischenschicht (2) gedruckt wird.

9. Bodenbelag nach Anspruch 8, **dadurch gekennzeichnet, dass** die Druckschicht (3) sandwichartig zwischen der Zwischenschicht (2) und der Schutzschicht (4) angeordnet ist.

10. Bodenbelag nach einem der Ansprüche 5 bis 7, **dadurch gekennzeichnet, dass** die Druckschicht (3) aus einer Tintenschicht besteht, die auf die Schutzschicht (4) gedruckt wird.

11. Bodenbelag nach einem der Ansprüche 5 bis 10, **dadurch gekennzeichnet, dass** die Zwischenschicht (2) gewebt, vliesstoffartig oder in Form einer Folie ist.

## Claims

1. A method for manufacturing a floor covering **characterised in that** it comprises the steps of:
(a) vulcanising a layer, called support layer (1), made of elastomer,
(b) assembling a layer, called intermediate layer (2), to the support layer (1) during the step of vulcanising, the intermediate layer (2) being made of a material selected from the group consisting of polyester, polyetheretherketone, polyetherimide, polysulfone, polyimide, polyamide, fluoropolymer, polyurethane and paper,
(c) printing a layer, called print layer (3), on the intermediate layer (2) or on a layer, called protective layer (4), which is transparent,
(d1) in the case where the print layer (3) has been printed on the intermediate layer (2), assembling the transparent protective layer (4) to the print layer (3) of the set comprising the print layer (3), the intermediate layer (2) and the support layer (1), or
(d2) in the case where the print layer (3) has been printed on the transparent protective layer (4), assembling the print layer (3) of the set comprising the print layer (3) and the protective layer (4) to the intermediate layer (2) of the set comprising the intermediate layer (2) and the support layer (1).

2. The method for manufacturing according to claim 1, **characterised in that** the print layer (3) is printed by digital printing, preferably by ink jet printing.

3. The method for manufacturing according to claim 1 or 2 **characterised in that** it comprises the steps of:
(c1) printing the print layer (3) on the intermediate layer (2),
(d1) assembling the protective layer (4) to the print layer (3).

4. The method for manufacturing according to claim 1 or 2 **characterised in that** it comprises the steps of:
(c2) printing the print layer (3) on the protective layer (4),
(d2) assembling the print layer (3) of the set comprising the print layer (3) and the protective layer (4) to the intermediate layer (2) of the set comprising the intermediate layer (2) and the support layer (1).

5. A floor covering comprising at least:
- a layer, called protective layer (4), which is transparent,
- a layer, called print layer (3), consisting of an ink layer,
- a layer, called intermediate layer (2),
- a layer, called support layer (1),
- the intermediate layer (2) and the support layer (1) being assembled,
**characterised in that**:
- the intermediate layer (2) is made of a material selected from the group consisting of polyester, polyetheretherketone, polyetherimide, polysulfone, polyimide, polyamide, fluoropolymer, polyurethane and paper and
- the support layer (1) is made of elastomer.

6. The floor covering according to claim 5, **characterised in that** the intermediate layer (2) is made of polyester.

7. The floor covering according to claim 5 or 6, **characterised in that** the intermediate layer (2) and the support layer (1) are assembled during the vulcanisation of the elastomer of the support layer (1).

8. The floor covering according to any one of claims 5 to 7 **characterised in that** the print layer (3) consists of an ink layer printed on the intermediate layer (2).

9. The floor covering according to claim 8 **characterised in that** the print layer (3) is sandwiched between the intermediate layer (2) and the protective layer (4).

10. The floor covering according to any one of claims 5 to 7 **characterised in that** the print layer (3) consists of an ink layer printed on the protective layer (4).

11. The floor covering according to any one of claims 5 to 10 **characterised in that** the intermediate layer (2) is woven, non-woven or in film form.
